Europäisches Patentamt

European Patent Office

Office européen des brevets

(11) Publication number: **0 387 419 B1**

# EUROPEAN PATENT SPECIFICATION

(45) Date of publication of patent specification: **07.06.95**    (51) Int. Cl.⁶: **C08L 67/02**, C08L 33/00, C08K 7/04

(21) Application number: **89123455.1**

(22) Date of filing: **19.12.89**

(54) **Resin composition.**

(30) Priority: **16.03.89 JP 64442/89**

(43) Date of publication of application:
**19.09.90 Bulletin 90/38**

(45) Publication of the grant of the patent:
**07.06.95 Bulletin 95/23**

(84) Designated Contracting States:
**BE DE NL**

(56) References cited:
**EP-A- 0 112 197**
**GB-A- 2 047 253**

(73) Proprietor: **TOYO INK MANUFACTURING CO., LTD.**
**No. 3-13, Kyobashi 2-chome**
**Chuo-ku**
**Tokyo (JP)**

(72) Inventor: **Miyashita, Susumu**
**39-8-206, Motobuto**
**1-chome, Urawa-shi**
**Saitama-ken (JP)**
Inventor: **Sugiura, Makoto**
**2957-1-236 Imafuku**
**Kawagoe-shi**
**Saitama-ken (JP)**

(74) Representative: **Kraus, Walter, Dr. et al**
**Patentanwälte Kraus, Weisert & Partner**
**Thomas-Wimmer-Ring 15**
**D-80539 München (DE)**

Rank Xerox (UK) Business Services
(3.10/3.09/3.3.3)

## Description

The present invention relates to a molding resin composition having excellent shielding characteristic against electromagnetic waves. More specifically, it relates to a molding resin composition which causes no degradation of imapct strength and no defective appearence and has excellent shielding characteristic against electromagnetic waves.

Housings of computers, communication devices, etc., are conventionally formed of a thermoplastic resin such as an acrylonitrile-butadiene-styrene terpolymer resin, a polystyrene resin, a modified polyphenylene oxide resin (to be referred to as "PPO resin" hereinbelow), a polycarbonate resin, or the like. Since, however, these resins have no shielding characteristic against electromagnetic waves, various fabricating processes are carried out to impart the housings with shielding characteristic against electromagnetic waves.

For example, a new electrically conductive layer is formed on a plastic molded article by flame-spraying with zinc or plating the interior surface of the housing with nickel, coating an electrically conductive coating composition thereon, applying a metal sheet, or the like, whereby the housing is imparted with reflectivity to electromagnetic waves. As a result, leakage of radiant electromagnetic waves is prevented, and external electromagnetic waves are shielded.

In addition to the above fabricating processes to impart plastic molded articles with shielding characteristic against electromagnetic waves, it has been recently proposed to make molding materials per se electrically conductive in order to produce plastic molded articles having shielding characteristic against electromagnetic waves. For example, JP-A-43126/1980 discloses resin-processed article produced by incorporating an electrically conductive fiber such as a carbon fiber, metallic fiber, or the like into a synthetic resin. JP-A- 13516/1985 discloses a multilayered, molded article produced by injection-molding a thermoplastic resin on one surface or two surfaces of an injection-molded article of a thermoplastic resin having an electrically conductive filler. JP-A- 26783/1988 discloses a pillar-shaped member formed of an electrically conductive fiber bundle, a plastic portion impregnating into the bundle and another plastic portion covering the peripheral surface of the fiber bundle and containing no electrically conductive fiber.

EP-A-0 112 197 discloses compositions which comprise a thermoplastic polyester in combination with a thermoplastic addition polymer resin and an electrically conductive filler.

An electrically conductive plastic having a stainless steel fiber incorporated as an electrically conductive fiber exhibits shielding characteristic against electromagentic waves even if the amount of the stainless steel fiber is extremely smaller than that of other electrically conductive fillers. Thus, the stainless steel fiber is excellent in view of moldability, tinting, low costs, and the like. Further, since a carbon fiber and a metalcoated carbon fiber also exhibit excellent shielding characteristic against electromagnetic waves even in a relatively smaller amount, there have been many proposals for application thereof into structural parts as well as an effect of strength reinforcement as a plastic composite material.

The above plastic composite materials having a stainless steel fiber, carbon fiber, or the like incorporated have a problem that they cause defective appearance in use requiring decorative coating due to the incorporated, electrically conductive fiber when a normally usable one-pack type acryl lacquer coating composition, or the like is coated. That is, streaked, small concaves and convexes (silver streak) occur on a surface layer due to the incorporated, electrically conductive fiber, and streak patterns are existent even after the surface is coated. The stainless steel fiber also causes defective appearance, since the bent fiber pieces thereof present near the surface stick out when the surface resin layer is impregnated with a coating composition. Further, impact strength is badly decreased, presumably due to microvoids existing in the interface between the electrically conductive fiber and the resin.

It is an object of the present invention to provide a resin composition having excellent shielding characteristic against electromagnetic waves.

It is another object of the present invention to provide a resin composition which is free from causing defective appearance on a molded article even if the molded article therefrom is provided with a decorative coating of one-pack type acryl lacquer, etc.

It is further another object of the present invention to provide a resin composition which can form molded articles having excellent impact strength.

According to the present invention, there is provided a resin composition comprising 1 to 100 parts by weight of an electrically conductive fiber and a resin mixture of 5 to 50 parts by weight of a thermoplastic polyester resin with 100 parts by weight of one resin selected from the group consisting of an acrylonitrile-butadiene-styrene terpolymer resin, a mixture of said terpolymer with a polyvinyl chloride resin, and an acrylonitrileethylene propylene rubber-styrene terpolymer resin.

The present invention provides a resin composition comprising 1 to 100 parts by weight of an electrically conductive fiber into a resin mixture of 100 parts by weight of an acrylonitrile-butadiene-styrene terpolymer resin or an acrylonitrile-ethylene propylene rubber-styrene terpolymer resin with 5 to 50 parts of a thermoplastic polyester resin.

The present invention further provides a resin composition comprising 1 to 100 parts of an electrically conductive fiber into a resin mixture consisting of 100 parts by weight of a mixture of 30 to 70 parts by weight of an acrylonitrile-butadiene-styrene terpolymer resin with 70 to 30 parts by weight of a polyvinyl chloridie resin and 5 to 50 parts by weight of a thermoplastic polyester resin.

As the acrylonitrile-butadiene-styrene terpolymer resin (to be referred to as "ABS resin" hereinbelow) in the present invention, preferably usable are those resins which contain 15 to 25 % by weight of acrylonitrile, 25 to 45 % by weight of butadiene and 35 to 60 % by weight of styrene. As the acrylonitrile-ethylene propylene rubber-styrene terpolymer resin (to be referred to as "AES resin" hereinbelow), preferably usable are those resins which contain 15 to 25 % by weight of acrylonitrile, 25 to 45 % by weight of an ethylene propylene rubber and 35 to 60 % by weight of styrene. When the rubber content is smaller than the above lower limit, molded articles have poor impact strength, and when it is larger than the above upper limit, moldability and fluidity are hampered, and it is difficult to obtain any good molded article.

In the present invention, polyvinyl chloride resins having a polymerization degree of 600 to 1,200 are preferably usable.

The ABS resin or AES resin may contain normally usable various additives such as a dye, pigment, lubricant, stabilizer, UV light absorber, plasticizer, dispersant, etc., and it is also possible to incorporate thereto normally usable inorganic fillers such as talc, calcium carbonate, magnesium oxide, magnesium hydroxide, barium sulfate, calcium titanate, glass beads, glass fiber, etc.

Furthermore, in order to impart flame retardancy, it is also possible to add various flame retardants such as an organic halogen compound, organic phosphate compound, organic phosphite compound, red phosphorus, boron-based compound, antimony trioxide, antimony pentoxide, etc.

An ABS-polyvinyl chloride resin (to be referred to as "PVC resin" hereinbelow) prepared by blending an ABS resin with PVC is often used as a flameproofing ABS resin, and incorporation of an electrically conductive fiber into a resin mixture of this ABS-PVC resin with a thermoplastic polyester resin can also give excellent appearance to a coated surface and exhibit impact resistance.

The amount of the thermoplastic polyester resin per 100 parts of the ABS resin, the AES resin or a mixture of the ABS resin with the PVC resin is 5 to 50 parts by weight, preferably 10 to 50 parts by weight. When the amount is less than 5 parts by weight, improvement of appearance of a coating with one-pack type acryl lacquer, etc., is poor.

Examples of preferred thermoplastic polyester resins include polyethylene adipate, polyethylene sebacate, polyethylene terephthalate, polyethylene isophthalate, polybutylene terephthalate, polyethylene-2,6-naphthylate, polyarylate, polycarbonate, etc. These thermoplastic polyester resins may be used alone or in combination. Examples of the most preferably usable thermoplastic polyester resins are those which practically do not undergo much of hydrolysis, such polyethylene terephthalate resin and polybutylene terephthalate resin.

Examples of the electrically conductive fiber usable in the present invention include metal fiber, carbon fiber, metal-coated carbon fiber, metal-coated glass fiber, etc. These elecyrically conductive fibers may be used alone or in combination. Among metal fibers, a stainless steel fiber is preferable since it has high strength and high rigidity, can maintain a high length/diameter ratio after molding, and exhibits high shielding characteristic against electromagnetic waves in a very small amount. A carbon fiber and metal-coated fiber are also preferably usable since they exhibit a characteristic similar to that of the stainless steel fiber.

The diameter of the metal fiber is preferably 4 to 60 $\mu$m, more preferably 6 to 20 $\mu$m, whereby it is possible to obtain high shielding characteristic against electromagnetic waves at a small fiber amount. A carbon fiber and metal-coated carbon fiber having a diameter of 6 to 20 $\mu$m are also preferably usable.

These electrically conductive fibers may be dispersed in and kneaded with a resin mixture of ABS resin or AES resin with a thermoplastic polyester resin or a resin mixture of ABS-PVC resin with a thermoplastic polyester resin. Further, a high-concentration dispersion containing 50 to 95 % by weight of an electrically conductive fiber (so-called master batch) may be dispersed in the above resin mixture.

In case that the resin composition of the present invention is applied to a use requiring further high impact resistance, e.g. housings of outdoor-oriented electric appliances, it is also possible to further incorporate 1 to 50 parts by weight of a variety of compositions which are normally usable as an impact modifier. When the amount of the impact modifier is less than 1 part by weight, almost no effect of the impact modifier can be obtained. When it exceeds 50 parts by weight, undesirably, the properties of the impact modifier per se become dominant, and the flexural modulus of the composition is greatly decreased. The amount of the impact modifier is most preferably 3 to 20 parts by weight, and in this case, it is possible to obtain a resin composition having well-balanced properties of impact resistance, flexural modulus, etc.

Examples of the impact modifier include an ethylene ethyl acrylate (EEA) resin, EEA-maleic anhydride (MAH) high pressure process ethylene copolymer resin, styrene-ethylene-butadiene-styrene (SEBS) block copolymer resin, acrylonitrile-styrene-ethyleneglycidyl methacrylate (AS-EGMA) copolymer resin, etc. These impact modifiers may be used alone or in combination.

The composition of the present invention can be molded or formed into articles by using a generally usable molding machine for plastics such as an injection molding machine, die-extruder, vacuum forming machine, compression molding machine, or the like.

According to the present invention, there is provided a resin composition which is free from causing defective apperance on a molded article therefrom even if the molded article is provided with a decorative coating of one-pack type acryl lacquer, etc.

According to the present invention, there is futher provided a resin composition which can form molded articles having excellent impact strength.

EXAMPLES

The following Examples will illustrate the present invention futher in detail. In Examples, "part" stands for "part by weight" unless otherwise specified.

EXAMPLES 1~4

An ABS resin (trade name, Denka ABS GR 3000, a rubber content 35 % by weight, melt flow 9, manufactured by Denki Kagaku Kogyo) and a polybutylene terephthalate resin (to be referred to as "PBT" resin, a weight average molecular weight 67,000, melt flow 10) or a polyethylene terephthalate resin [to be referred to as "PET resin", intrinsic viscosity (IV value) 0.95] were formulated in amounts shown in Table 1, and stirred and mixed in a tumbler at 30 rpm for 10 minutes. Then, the mixture was melt-kneaded in a vent-type single screw extruder at a cylinder temperature of 240°C, a screw rotation number of 100 rpm and an output amount of 140 g/minute, and formed into strands. The strands were cut into pellets by using a pelletizer.

Eight parts of a choped strand (length 4 mm, diameter 8 $\mu$m) prepared by sizing a stainless steel continuous fiber (trade name, BEKI-SHIELD SPECIAL 302A, manufactured by NV BEKAERT SA) with a thermoplastic polyester resin, further coating the fiber with a thermoplastic resin and then cutting it was incorporated into 100 parts of the above-obtained pellets (Examples 1 and 4). 19 parts of a chopped strand (length 6 mm, diameter 8 $\mu$m) of a carbon fiber (trade name, Besfight HTA-C6S, manufactured by Toho Rayon K.K.) was incorporated into 100 parts of the above-obtained pellets (Example 2). 9 parts of a chopped strand (length 6 mm, diameter 8 $\mu$m) of a nickel-plated carbon fiber (trade name, Besfight MC-HTA-C6S, manufactured by Toho Rayon K.K.) was incorporated into 100 parts of the above-obtained pellets (Example 3). In each of Examples, the resultant mixture was stirred and mixed in a tumbler at 30 rpm for 2 minutes, and then molded under the same injection molding conditions as those for molding of ordinary ABS resins, to give samples.

The samples were tested for an Izod impact strength (JIS K-7203), flexural modulus (JIS K-7110) and electromagnetic wave-shielding performance (Advantest method).

One-pack type acryl lacquer coating composition (trade name, Polynal No. 500N, manufactured by Ohashi Kagaku K.K.) and a thinner (trade name, Thinner No. 5600, manufactured by Ohashi Kagaku K.K.) were mixed in a 1:1 mixing ratio and the mixture was stirred to obtain a coating composition. Then, the coating composition was coated on the samples and dried, and the coated surfaces were examined by the eyes.

COMPARATIVE EXAMPLES 1~3

Examples 1~3 were repeated except that the same ABS resin as that used in Example 1 was used in place of the ABS/PBT resin used in Examples 1~3.

EXAMPLES 5~6

Example 1 was repeated except that an AES resin (trade name, JSR AES-145, manufactured by Nippon Gosei Gomu K.K., rubber content 35 % by weight, melt flow 8) was used (Example 5) or an ABS-PVC resin (trade name, Kaneka Enplex N340, PVC content 50 % by weight, melt flow 15) was used in place of the ABS resin in Example 1.

COMPARATIVE EXAMPLES 4~5

Examples 5 and 6 were repeated except that an AES resin (the same resin as that used in Example 5) was used (Comparative Example 4) in place of the AES/PBT resin in Example 5 or an ABS-PVC resin (the same resin as that used in Example 6) was used (Comparative Example 5) in place of the ABS-PVC/PBT resin in Example 6.

EXAMPLES 7~9

An impact modifier [an EEA-MAH high pressure process ethylene copolymer resin (trade name, Bondine AX 8060, manufactured by Sumitomo C.D.F. Kagaku K.K.) (Example 7), an AS-EGM copolymer resin (trade name, Modiper A4407, manufactured by Nippon Uka K.K.) (Example 8), or an SEBS block copolymer (trade name, Rabalon J6300, manufactured by Mitsubishi Uka K.K.) (Example 9)] was incorporated into the resin mixture of Example 1, and the procedure of Example 1 was repeated to obtain samples.

EXAMPLE 10

Example 1 was repeated except that an ABS resin having a small rubber content (trade name, Denka ABS QF, manufactured by Denki Kagaku Kogyo K.K., a rubber content 25 % by weight, melt flow 40) was used in place of the ABS resin in Example 1, to obtain samples.

EXAMPLE 11

Example 1 was repeated except that an ABS/PBT/polycarbonate resin (weight average molecular weight 220, melt flow 20) was used in place of the ABS/PBT resin in Example 1, to obtain samples.

Table 1 shows the results of measurements of the samples obtained in Examples and Comparative Examples.

All of molded articles obtained from the compositions of the present invention exhibited excellent apperances of coatings.

5

Table 1

| COMPOSITION (part by weight) | Examples | | | | | |
|---|---|---|---|---|---|---|
| | 1 | 2 | 3 | 4 | 5 | 6 |
| Denka ABS GR3000 | 85 | 85 | 85 | 85 | | |
| Denka ABS QF | | | | | | |
| JSR AES 145 | | | | | 85 | |
| Kaneka Enplex N340 | | | | | | 85 |
| PBT Resin | 15 | 15 | 15 | | 15 | 15 |
| PET Resin | | | | 15 | | |
| Polycarbonate resin | | | | | | |
| Bondine AX8060 | | | | | | |
| Modiper A4407 | | | | | | |
| Rabalon J6300 | | | | | | |
| Stainless steel fiber | 8 | | | 8 | 8 | 8 |
| Carbon fiber | | 19 | | | | |
| Nickel-plated carbon fiber | | | 9 | | | |
| MEASUREMENT RESULTS | | | | | | |
| Izod impact strength (kg·cm/cm$^2$) | 10 | 7 | 9 | 7 | 8 | 7 |
| Flexural modulus (kg/cm$^2$ x10$^{-3}$) | 23 | 59 | 36 | 48 | 22 | 27 |
| Shielding effect | 53 | 27 | 62 | 51 | 54 | 58 |
| Appearance of coating | A | A | A | A | A | A |

Note 1: A spectrum analyzer TR4172 and a tool for measurement of shielding characteristic against electromagnetic wave, manufactured by Advantest were used.

Note 2: A; Excellent, B; Slightly defective but usable, C: Defective

to be continued

Table 1 (continued)

| COMPOSITION (part by weight) | Examples | | | | |
|---|---|---|---|---|---|
| | 7 | 8 | 9 | 10 | 11 |
| Denka ABS GR3000 | 80 | 75 | 75 | | 80 |
| Denka ABS QF | | | | 85 | |
| JSR AES 145 | | | | | |
| Kaneka Enplex N340 | | | | | |
| PBT Resin | 15 | 15 | 15 | 15 | 10 |
| PET Resin | | | | | |
| Polycarbonate resin | | | | | 10 |
| Bondine AX8060 | 5 | | | | |
| Modiper A4407 | | 10 | | | |
| Rabalon J6300 | | | 10 | | |
| Stainless steel fiber | 8 | 8 | 8 | 8 | 8 |
| Carbon fiber | | | | | |
| Nickel-plated carbon fiber | | | | | |
| MEASUREMENT RESULTS | | | | | |
| Izod impact strength (kg·cm/cm$^2$) | 13 | 12 | 12 | 7 | 12 |
| Flexural modulus (kg/cm$^2$x10$^{-3}$) | 21 | 20 | 21 | 25 | 23 |
| Shielding effect | 52 | 54 | 53 | 55 | 54 |
| Appearance of coating | A | A | A | A | A |

Note 1: A spectrum analyzer TR4172 and a tool for measurement of shielding characteristic against electromagnetic wave, manufactured by Advantest, were used.

Note 2: A; Excellent, B; Slightly defective but usable, C: Defective

to be continued

Table 1 (continued)

| COMPOSITION (part by weight) | Comparative Examples | | | | |
|---|---|---|---|---|---|
| | 1 | 2 | 3 | 4 | 5 |
| Denka ABS GR3000 | 100 | 100 | 100 | | |
| Denka ABS QF | | | | | |
| JSR AES 145 | | | | 100 | |
| Kaneka Enplex N340 | | | | | 100 |
| PBT Resin | | | | | |
| PET Resin | | | | | |
| Polycarbonate resin | | | | | |
| Bondine AX8060 | | | | | |
| Modiper A4407 | | | | | |
| Rabalon J6300 | | | | 8 | |
| Stainless steel fiber | 8 | | | 8 | 8 |
| Carbon fiber | | 19 | | | |
| Nickel-plated carbon fiber | | | | | |
| MEASUREMENT RESULTS | | | | | |
| Izod impact strength (kg·cm/cm²) | 13 | 8 | 10 | 11 | 8 |
| Flexural modulus (kg/cm²x10⁻³) | 21 | 56 | 34 | 21 | 21 |
| Shielding effect | 53 | 25 | 58 | 52 | 50 |
| Appearance of coating | C | C | C | C | B |

Note 1: A spectrum analyzer TR4172 and a tool for measurement of shielding characteristic against electromagnetic wave, manufactured by Advantest, were used.

Note 2: A; Excellent, B; Slightly defective but usable, C: Defective

## Claims

1. A resin composition comprising 1 to 100 parts by weight of an electrically conductive fiber and a resin mixture of 5 to 50 parts by weight of a thermoplastic polyester resin with 100 parts by weight of one resin selected from the group consisting of an acrylonitrile-butadiene-styrene terpolymer resin, a mixture of said terpolymer with a polyvinyl chloride resin, and an acrylonitrileethylene propylene rubber-styrene terpolymer resin.

2. A resin composition according to claim 1 wherein the acrylonitrile-butadiene-styrene terpolymer resin contains 15 to 25 % by weight of acrylonitrile, 25 to 45 % by weight of butadiene and 35 to 60 % by weight of styrene.

3. A resin composition according to claim 1 wherein the acrylonitrile-ethylene propylene rubber-styrene terpolymer resin contains 15 to 25 % by weight of acrylonitrile, 25 to 45 % by weight of an ethylene propylene rubber and 35 to 60 % by weight of styrene.

4. A resin composition according to claim 1 wherein 10 to 50 parts by weight of the thermoplastic polyester resin is incorporated.

5. A resin composition according to claim 1 whrein the electrically conductive fiber is at least one fiber selected from a group consisting of a metal fiber, carbon fiber, metal-coated carbon fiber and metal-coated glass fiber.

6. A resin composition according to claim 5 wherein the metal fiber has a diameter of 4 to 60 $\mu$m.

7. A resin composition according to claim 5 wherein the carbon fiber, metal-coated carbon fiber and metal-coated glass fiber have a diameter of 6 to 20 $\mu$m.

8. A resin composition according to claim 1 wherein the mixture of the acrylonitrile-butadiene-styrene terpolymer resin and the polyvinyl chloride resin contains 30 to 70 parts by weight of said terpolymer resin and 70 to 30 parts by weight of the polyvinyl chloride resin.

9. A resin composition according to claim 1 wherein the polyvinyl chloride resin has a polymerization degree of 600 to 1,200.

**Patentansprüche**

1. Harzmasse, umfassend 1 bis 100 Gewichtsteile einer elektrisch leitfähigen Faser und ein Harzgemisch aus 5 bis 50 Gewichtsteilen eines thermoplastischen Polyesterharzes und 100 Gewichtsteilen eines Harzes, ausgewählt aus der Gruppe, bestehend aus einem Acrylnitril-Butadien-StyrolTerpolymer-Harz, einem Gemisch dieses Terpolymers mit einem Polyvinylchloridharz und einem Acrylnitril-EthylenPropylen-Kautschuk-Styrol-Terpolymer-Harz.

2. Harzmasse nach Anspruch 1, dadurch **gekennzeichnet,** daß das Acrylnitril-Butadien-Styrol-Terpolymer-Harz 15 bis 25 Gew.-% Acrylnitril, 25 bis 45 Gew.-% Butadien und 35 bis 60 Gew.-% Styrol enthält.

3. Harzmasse nach Anspruch 1, dadurch **gekennzeichnet,** daß das Acrylnitril-Ethylen-Propylen-Kautschuk-Styrol-Terpolymer-Harz 15 bis 25 Gew.-% Acrylnitril, 25 bis 45 Gew.-% eines Ethylen-Propylen-Kautschuks und 35 bis 60 Gew.-% Styrol enthält.

4. Harzmasse nach Anspruch 1, dadurch **gekennzeichnet,** daß 10 bis 50 Gewichtsteile des thermoplastischen Polyesterharzes eingearbeitet worden sind.

5. Harzmasse nach Anspruch 1, dadurch **gekennzeichnet,** daß die elektrisch leitfähige Faser mindestens eine Faser, ausgewählt aus einer Gruppe, bestehend aus einer Metallfaser, einer Carbonfaser, einer metallüberzogenen Carbonfaser und einer metallüberzogenen Glasfaser ist.

6. Harzmasse nach Anspruch 5, dadurch **gekennzeichnet,** daß die Metallfaser einen Durchmesser von 4 bis 60 $\mu$m hat.

7. Harzmasse nach Anspruch 5, dadurch **gekennzeichnet,** daß die Carbonfaser, die metallüberzogene Carbonfaser und die metallüberzogene Glasfaser einen Durchmesser von 6 bis 20 $\mu$m haben.

8. Harzmasse nach Anspruch 1, dadurch **gekennzeichnet,** daß das Gemisch des Acrylnitril-Butadien-Styrol-Terpolymer-Harzes und des Polyvinylchloridharzes 30 bis 70 Gewichtsteile des Terpolymerharzes und 70 bis 30 Gewichtsteile des Polyvinylchloridharzes enthält.

9. Harzmasse nach Anspruch 1, dadurch **gekennzeichnet,** daß das Polyvinylchloridharz einen Polymerisationsgrad von 600 bis 1200 aufweist.

**Revendications**

1. Composition de résine comprenant 1 à 100 parties en poids d'une fibre électriquement conductrice et un mélange de résines à base de 5 à 50 parties en poids d'une résine de polyester thermoplastique avec 100 parties en poids d'une résine choisie parmi le groupe comprenant une résine terpolymère d'acrylonitrile-butadiène-styrène, un mélange de ce terpolymère avec une résine de chlorure de polyvinyle, et une résine terpolymère d'acrylonitrile-caoutchouc d'éthylène propylène-styrène.

2. Composition de résine suivant la revendication 1, caractérisée en ce que la résine terpolymère d'acrylonitrile-butadiène-styrène contient 15 à 25 % en poids d'acrylonitrile, 25 à 45 % en poids de butadiène et 35 à 60 % en poids de styrène.

3. Composition de résine suivant la revendication 1, caractérisée en ce que la résine terpolymère d'acrylonitrile-caoutchouc d'éthylène propylène-styrène contient 15 à 25 % en poids d'acrylonitrile, 25 à 45 % en poids d'un caoutchouc d'éthylène propylène et 35 à 60 % en poids de styrène.

4. Composition de résine suivant la revendication 1, caractérisée en ce que 10 à 50 parties en poids de la résine de polyester thermoplastique sont incorporées.

5. Composition de résine suivant la revendications 1, caractérisée en ce que la fibre électriquement conductrice est au moins une fibre choisie parmi un groupe comprenant une fibre métallique, une fibre de carbone, une fibre de carbone revêtue de métal et une fibre de verre revêtue de métal.

6. Composition de résine suivant la revendication 5, caractérisée en ce que la fibre métallique présente un diamètre de 4 à 60 $\mu$m.

7. Composition de résine suivant la revendication 5, caractérisée en ce que la fibre de carbone, la fibre de carbone revêtue de métal et la fibre de verre revêtue de métal ont un diamètre de 6 à 20 $\mu$m.

8. Composition de résine suivant la revendication 1, caractérisée en ce que le mélange de résine terpolymère d'acrylonitrile-butadiène-styrène et de résine de chlorure de polyvinyle contient 30 à 70 parties en poids de la résine terpolymère et 70 à 30 parties en poids de la résine de chlorure de polyvinyle.

9. Composition de résine suivant la revendication 1, caractérisée en ce que la résine de chlorure de polyvinyle a un degré de polymérisation de 600 à 1200.